# EUROPEAN PATENT SPECIFICATION

(11) **EP 2 597 971 B1**
(45) Date of publication and mention of the grant of the patent: **29.03.2017**
(21) Application number: 11733589.3
(22) Date of filing: 12.07.2011
(51) Int. Cl.: A23L 27/30, A23G 3/38, A23G 3/42

(54) **CONFECTIONERY PRODUCTS CONTAINING ERYTHRITOL**
SÜSSWAREN MIT ERYTHRITOL
PRODUITS DE CONFISERIE CONTENANT DE L'ÉRYTHRITOL

(30) Priority: 27.07.2010 EP 10007771
(43) Date of publication of application: 05.06.2013
(73) Proprietor: Cargill, Incorporated, Wayzata, MN 55391 (US)
(72) Inventor: DE LOBEL, Jan, NL-4901 AV Oosterhout (NL); VERCAUTEREN, Ronny, Leontina, Marcel, B-9120 Beveren (BE); VAN HAVERE, Martine Maria Roberta, B-3060 Bertem (BE)
(74) Representative: Elseviers, Myriam
(86) International application number: PCT/EP2011/003475
(87) International publication number: WO 2012/013296

(56) References cited:
- EP-A2- 0 303 295
- JP-A- 2010 075 104
- US-A1- 2002 011 181
- Anonymous: "Herbal Fresh Lozenges", Global New Products Database, Mintel International Group Ltd , June 2010 (2010-06), XP002605889, Retrieved from the Internet: URL:http://www.gnpd.com/sinatra/gnpd/searc h_results/&item_id=1338704 [retrieved on 2010-10-19]
- DATABASE WPI Week 201048 Thomson Scientific, London, GB; AN 2010-D15079 XP002605891, & CN 101 664 095 A (ZHANG Y) 10 March 2010 (2010-03-10)

## Description

### Field of the Invention

The present invention relates to a confectionery product containing maltodextrin, and at least 93% w/w erythritol.

### Background of the Invention

Recent developments in confectionery manufacture have been the replacement of part or all of the sugar by sugar alcohol (polyol) in the interest of providing a product having a reduced calorie content and a lower tendency to cause tooth decay. Among the polyols which have been proposed for the manufacture of confectionery are isomalt, maltitol, xylitol, erythritol and mixtures thereof.

EP 0 533 334 describes a process for the production of hard candy characterized in that the maltitol content of the sugar alcohol mixture is more than 77% but less than 86% by weight based on dry substance.

US 4,971,798 describes a hard confection based upon hydrogenated isomaltulose (= isomalt).

US 4,883,685 describes a hard candy which comprises erythritol and saccharides selected from among sugars and sugar alcohols other than erythritol as well as a process for producing the hard candy.

JP 3100186 describes an erythritol based candy which is further containing a hydrocolloid.

EP 0 303 295 and JP2010 075104 disclose erythritol based hard candies.

There is still a further need of having a confectionery product which is based upon polyols and is sugar free.

### Summary of the Invention

The current invention relates to a confectionery product containing maltodextrin, and at least 93% w/w erythritol preferably at least 95% w/w erythritol, more preferably at least 97% w/w erythritol and said confectionery product is selected from the group consisting of hard candies, brittle, caramel, and toffee, preferably hard candies.

Furthermore the current invention relates to a process for preparing a confectionery product by heating at a temperature from 120 to 160°C an erythritol-containing mixture wherein the dry matter is containing maltodextrin and at least 93% w/w erythritol.

### Detailed Description

The current invention relates to a confectionery product containing maltodextrin, and at least 93% w/w erythritol, preferably at least 95% w/w erythritol, more preferably at least 97% w/w erythritol and said confectionery product is selected from the group consisting of hard candies, brittle, caramel, and toffee, preferably hard candies.

Confectionery product within the scope of the present invention are grainy products such as hard candies, brittle, caramel, and toffee, preferably hard candies.

More specifically it relates to a hard candy comprising maltodextrin, 93-97% w/w erythritol, flavours, high-intensity sweeteners and/or colouring agents. The hard candy may further comprise crystallisation modifiers selected from a group consisting of microbial gums, agar agar, pectin, alginic acid, sodium alginate, beta-glucans, carrageenan, glucomannan, guar gum, gum ghatti, gum tragacanth, karaya gum, tara gum, fenugreek gum, locust bean gum, and mixtures of two or more thereof, preferably carrageenan, as well as edible acids and/or their corresponding salts.

Erythritol is a carbohydrate-based polyol (sugar alcohol), i.e. a tetriitol represented by the chemical formula C₄H₁₀O₄ and which has an excellent appearance in the form of white crystals and it is similar to the appearance of granulated sugar, sucrose. It is highly soluble in water, non-digestive, providing zero calories and is non cariogenic.

Furthermore, the confectionery product of the current invention is comprising maltodextrin. Maltodextrin consists of D-glucose units predominantly linked with α(1→4) glycosidic bonds and is classified by DE (dextrose equivalent) between 3 to 20. Typically maltodextrin is composed of a mixture of chains that vary from three to twenty glucose units long and it is produced from starch by partial hydrolysis. Maltodextrin is present in an amount of from 2% to 7% by weight of the confectionery product, preferably from 2% to 6% by weight of the confectionery product. Maltodextrin is present in an amount of from from 2% to 5% by weight of the confectionery product preferably hard candy.

One or more crystallization modifiers are added and are selected from a group consisting of microbial gums, agar agar, pectin, alginic acid, sodium alginate, beta-glucans, carrageenan, glucomannan, guar gum, gum ghatti, gum tragacanth, karaya gum, tara gum, fenugreek gum, locust bean gum, and mixtures of two or more thereof, preferably carrageenan.

The term "microbial gums", as used herein, is intended to mean all gum polysaccharides of microbial origin, i.e. from algae, bacteria or fungi. Examples thereof include, for example, gellan and xanthan gums that are both produced by bacteria. A preferred microbial gum for use herein is xanthan gum, a microbial desiccation resistant polymer prepared commercially by aerobic submerged fermentation.

Xanthan is an anionic polyelectrolyte with a β-(1,4)-D-glucopyranose glucan backbone having side chains of (3,1)-α-linked D-mannopyranose-(2,1)-β-D-glucuronic acid-(4,1)-β-D-mannopyranose on alternating residues.

The repeating unit of gellan is a tetrasaccharide which consists of two residues of D-glucose and one of each residues of L-rhamnose and D-glucuronic acid. The tetrasacharide repeat has the following structure:[D-Glc(β1→4)D-GlcA(β1→4)D-Glc([β1→4)L-Rha(α1→3)]n. As it is evident from the formula the tetrasacharide units are connected with each other using an (α1→3) glycosidic bond.

Agar agar is a plant-derived gum polysaccharide The gelling agent is an unbranched polysaccharide obtained from the cell walls of some species of red algae, primarily from the genera Gelidium and Gracilaria, or seaweed.

Another water-soluble dietary fiber is pectin, which is a heterogeneous group of acidic polysaccharides found in fruit and vegetables and mainly prepared from waste citrus peel and apple pomace. Pectin has a complex structure, wherein a large part of the structure consists of homopolymeric partially methylated poly-α-(1,4)-D-galacturonic acid residues with substantial hairy non-gelling areas of alternating α-(1,2)-L-rhamnosyl-α-(1,4)-D-galacturonosyl sections containing branch points with mostly neutral side chains (1 to 20 residues) of mainly L-arabinose and D-galactose. The properties of pectins depend on the degree of esterification, which is normally about 70%. The low-methoxy (LM) pectins are less than 40% esterified, while high-methoxy (HM) pectins are more than 43% esterified, usually 67%.

Alginic acid and sodium alginate are vegetable gums of linear polymers containing β-(1,4)-linked D-mannuronic acid and α-(1,4)-linked L-guluronic acid residues produced by seaweeds.

Beta-glucans which are defined to consist of linear unbranched polysaccharides of linked β-(1,3)-D-glucopyranose units in a random order. Beta-glucans occur, for example, in the bran of grains, such as barley, oats, rye and wheat.

Carrageenan is a generic term for polysaccharides prepared by alkaline extraction from red seaweed. Carrageenan includes linear polymers of about 25,000 galactose derivatives. The basic structure of carrageenan consists of alternating 3-linked β-D-galactopyranose and 4-linked α-D-galactopyranose units. There are three main classes of commercial carrageenan: the kappa, lota and lambda carrageenan.

Glucomannan is mainly a straight-chain polymer, with a small amount of branching. The component sugars are β-(1→4)-linked D-mannose and D-glucose in a ratio of 1.6:1.[1] The degree of branching is about 8% through β-(1→6)-glucosyl linkages.

Guar gum, which is defined as a galactomannan consisting of a α-(1,4)-linked β-D-mannopyranose backbone with branch points from their 6-positions linked to α-D-galactose. It is non-ionic and typically made up of about 10,000 residues. Guar gum is highly water-soluble and, for example, more soluble than locust bean gum.

Gum ghatti is a natural gum obtained from Indian tree, *Anogeissus latifolia.*

Gum tragacanth is a viscous, odorless, tasteless, water-soluble mixture of polysaccharides obtained from sap which is drained from the root of several species of Middle Eastern legumes of the genus *Astragalus,* including A. *adscendens*, A. *gummifer*, and A. *tragacanthus*.

Karaya gum, is a vegetable gum produced as an exudate by trees of the genus Sterculia. It is an acid polysaccharide composed of the sugars galactose, rhamnose and galacturonic acid.

Tara gum, is a white or beige, nearly odorless powder that is produced by separating and grinding the endosperm of C. spinosa seeds. The major component of the gum is a galactomannan polymer similar to the main components of guar and locust bean gums.

Fenugreek gum,consists of D-mannopyranose and D-galactopyranose residues with a molar ratio of 1.2:1.0. The main chain of this galactomannan comprises β-(1,4)-linked D-mannopyranose residues, in which 83.3% of the main chain is substituted at C-6 with a single residue of α-(1,6)-D-galactopyranose. The galactomannan is made up of about 2,000 residues. Fenugreek gum (seed endosperm) contains 73.6% galactomannan.

Locust bean gum is a galactomannan similar to guar gum. It is polydisperse, non-ionic, and is made up of about 2,000 residues. Locust bean gum is less soluble and less viscous than guar gum and needs heating to dissolve but is soluble in hot water.

The crystallization modifiers are present in an amount of 0% w/w to 2% w/w, preferably 0% w/w to 2% w/w carrageenan is present in the confectionery product, more preferably carrageenan is present in an amount of 0.1 %, 0.2% , 0.5% w/w of the confectionery product. The current invention further relates to a confectionery product, preferably a hard candy wherein carrageenan is present in an amount of 0.1% w/w to 2% w/w, or in an amount of 0.2% to 0.5% w/w.

Furthermore, in a further embodiment, the confectionery product is comprising erythritol, maltodextrin, edible acids and/or their corresponding salts, and optionally crystallization modifiers selected from a group consisting of microbial gums, agar agar, pectin, alginic acid, sodium alginate, beta-glucans, carrageenan, glucomannan, guar gum, gum ghatti, gum tragacanth, karaya gum, tara gum, fenugreek gum, locust bean gum, and mixtures of two or more thereof, preferably carrageenan.

Suitable acids are selected from the group consisting of malic acid, fumaric acid, lactic acid, tartaric acid, glucono-delta lactone, salts of gluconic acid, phosphoric acid, succinic acid, adipic acid, ascorbic acid, acetic acid, citric acid and mixture of two or more thereof. Preferably citric acid is used as edible acid, more preferably in combination with its corresponding salt, tri-sodium citrate. The acids and/or salts are added in a quantity based on dry matter of the confectionery product in an amount of 0 to 5% w/w, 0.1 to 1.5% w/w, from 0.1 to 1% w/w, or from 0.2% to 0.5% w/w.

The confectionery product further comprises flavours, high-intensity sweeteners, colouring agents or a mixture of two or all three (=edible acids/salts, flavours, colouring agents) are present.

The flavours are selected from mint flavour, chocolate mint flavour, bubblegum flavour, apple spice flavour, black cherry flavour, pineapple flavour, cola flavour, grape flavour, cherry flavour, apple flavour and citrus flavours such as orange flavour, lemon flavour, lime flavour, fruit punch and mixtures of two or more thereof. The amount of flavour depends upon the flavour or flavours selected, the flavour impression desired and the form of flavour used.

A high-intensity sweetener, which can be used as non-nutritive sweetener can be selected from the group consisting of aspartame, acesulfame salts such as acesulfame-K, saccharins (e.g. sodium and calcium salts), cyclamates (e.g. sodium and calcium salts), sucralose, alitame, neotame, steviosides, glycyrrhizin, neohesperidin dihydrochalcone, monellin, thaumatin, brazzein, mixtures of two or more thereof, and the like. Actually any other natural derived high-intensity sweetener is suitable as well.

If desired, colouring agents can also be added as well. Any water-soluble colouring agent approved for food use can be utilized for the current invention.

In a specific embodiment, the current invention relates to a confectionery product comprising 93% w/w - 97% w/w erythritol, 2% w/w -6% w/w maltodextrin, 0-2% w/w carrageenan, 0 to 5% w/w edible acids and/salts, and flavours and/or colouring agents.

The current invention further relates to a confectionery product wherein the confectionery product is a hard candy and is comprising 93% w/w - 97% w/w erythritol, maltodextrin and a crystallisation modifier. Optionally edible acids and/salts or flavours or colouring agents or a mixture of two or all three (=edible acids/salts, flavours, colouring agents) are present.

The current invention further relates to a hard candy comprising 93% w/w - 97% w/w erythritol, maltodextrin and a crystallisation modifier selected from a group consisting of microbial gums, agar agar, pectin, alginic acid, sodium alginate, beta-glucans, carrageenan, glucomannan, guar gum, gum ghatti, gum tragacanth, karaya gum, tara gum, fenugreek gum, locust bean gum, and mixtures of two or more thereof, preferably carrageenan. Optionally edible acids and/salts or flavours or colouring agents or a mixture of two or all three (=edible acids/salts, flavours, colouring agents) are present

The current invention further relates to a hard candy comprising 93% w/w - 97% w/w erythritol, 2% w/w -6% w/w maltodextrin, 0-2% w/w crystallisation modifier selected from a group consisting of microbial gums, agar agar, pectin, alginic acid, sodium alginate, beta-glucans, carrageenan, glucomannan, guar gum, gum ghatti, gum tragacanth, karaya gum, tara gum, fenugreek gum, locust bean gum, and mixtures of two or more thereof, preferably carrageenan, 0.1 to 5% w/w edible acids and/salts and flavours and/or colouring agents.

Preferably the confectionery product is a hard candy which is comprising 5% maltodextrin, at least 93% w/w erythritol, and 0.5% carrageenan by weight. More preferably the confectionery product is a hard candy which is comprising 5% maltodextrin, at least 93% w/w erythritol, 0.5% carrageenan by weight and 0.1 to 1.5% edible acids and/or salts. Optionally flavours and/or colouring agents are added.

The current invention relates to a process for preparing a confectionery product by heating at a temperature from 120 to 160°C an erythritol-containing mixture wherein the dry matter is containing maltodextrin and at least 93% w/w erythritol.

Disadvantages such as uneven crystallization, uneven surface, grainy sandy texture and brittleness have been overcome by the confectionery product of the current invention.

Furthermore it is shown that the hard candy containing erythritol and maltodextrin is significantly harder than a hard candy containing erythritol and without maltodextrin. A hard candy containing erythritol, maltodextrin and a crystallisation modifiers selected from a group consisting of microbial gums, agar agar, pectin, alginic acid, sodium alginate, beta-glucans, carrageenan, glucomannan, guar gum, gum ghatti, gum tragacanth, karaya gum, tara gum, fenugreek gum, locust bean gum, and mixtures of two or more thereof, preferably carrageenan is even harder than the hard candy containing erythritol and maltodextin.

The harder the candy the less breakage one can expect.

The invention will hereunder be illustrated in the form of the following examples.

### Examples

### Analytical methods

Texture analysis was conducted on the Stable Microsystems equipment, TA-XT plus Texture Analyzer. The program setting was as follows:

| | |
|---|---|
| TA Mode: | Measure Force in Compression |
| TA Option: | Return to Start |
| Pre-Test Speed: | 1.0 mm/s |
| Test Speed: | 1.0 mm/s |
| Post Speed: | 10.0 mm/s |
| Test Distance: | 4.0 mm |
| Trigger Value: | 50 g |
| PPS: | 400.00 |
| | |
| Probe: | 2 mm Cylinder Probe (P/2) using a 30 kg load cell |
| Accessory: | Heavy Duty Platform (HDP/90) |
| | |
| Results: | Force (g) (Hardness) |
| | Distance (mm) (Fracturability) |

Sample Preparation: All samples were allowed to equilibrate at controlled temperature of 20°C and were then removed from the place of storage just prior to testing.

Test Set Up: The HDP/90 was secured onto the machine base. The probe was calibrated prior to testing the samples. The sample were placed on the blank plate of the HDP/90 and positioned centrally under the probe. The penetration test was commenced.

Two characteristics were tested on the texture analyzer; hardness and fracturability. Below are definitions from Texture Technology on hardness and fracturability.

Hardness is the peak force of the first compression of the candy.
When the products fracture; the fracturability point occurs where the plot has its first significant peak (where the force falls off) during the probe's first compression of the product. Hardness and fracturability are two completely different parameters that are not comparable with each other.

### Example 1

### Recipe

- Following recipes were tested:
- Recipe 1A
- 95 w/w% erythritol (Cargill Eridex 16954)
- 5.00 % w/w maltodextrin (C*Dry MD 001910)
or
- Recipe 1 B
- 94.8 % w/w erythritol (Cargill Eridex 16954)
- 5.00 % w/w maltodextrin (C*Dry MD 001910)
- 0.1 w/w% citric acid monohydrate
- 0.1 w/w% tri-sodium citrate
Or
- Recipe 1C
- 93.5 % w/w erythritol (Cargill Eridex 16954)
- 5.00 % w/w maltodextrin (C*Dry MD 001910)
- 1.00 w/w% citric acid monohydrate
- 0.50 w/w% tri-sodium citrate

### Cooking and shaping - Method

Comelts were prepared:
- erythritol and maltodextrin was weighed in 250ml Duran flasks with stopper. The Duran flasks were put in an oil bath at 155°C for 15 minutes until the erythritol was melted, the flask was swirled regularly.
- Citric Acid Monohydrate and tri-sodium citrate were added to the melted erythritol in the corresponding flask. The flask was swirled to dissolve the Citric Acid Monohydrate
- Aliquots of 3.02ml (= 3.7g) were sampled with a Gilson 5 ml pipet and transferred to a mould at a temperature of 130°C
- The formed hard candies were removed from the mould once they had cooled down.

The hard candies did not break easily.

The hardness of the hard candies prepared with recipe 1A and measured with the texture analyser was between 16.3 to 23.2 kg, with an average value of 20.1 kg and had a distance between 0.62 to 0.80 mm, with an average of 0.74 mm.

### Example 2

### Recipe

- Following recipes were tested:
- Recipe 2A
- 94.5 w/w% erythritol (Cargill Eridex 16954)
- 5.00 % w/w maltodextrin (C*Dry MD 001910)
- 0.5 % w:w carrageenan (Satiagel MM50 - Cargill)
or
- Recipe 2B
- 94.30 % w/w erythritol (Cargill Eridex 16954)
- 5.00 % w/w maltodextrin (C*Dry MD 001910)
- 0.5 % w:w carrageenan (Satiagel MM50 - Cargill)
- 0.1 w/w% citric acid monohydrate
- 0.1 w/w% tri-sodium citrate
or
- Recipe 2C
- 93.00 % w/w erythritol (Cargill Eridex 16954)
- 5.00 % w/w maltodextrin (C*Dry MD 001910)
- 0.5 % w:w carrageenan (Satiagel MM50 - Cargill)
- 1.00 w/w% citric acid monohydrate
- 0.50 w/w% tri-sodium citrate

### Cooking and shaping - Method

Comelts were prepared:
- Erythritol, carrageenan and maltodextrin was weighed in 250ml Duran flasks with stopper. The Duran flasks were put in an oil bath at 155°C for 15 minutes until the erythritol was melted, the flask was swirled regularly.
- Citric Acid Monohydrate and tri-sodium citrate were added to the melted erythritol in the corresponding flask. The flask was swirled to dissolve the Citric Acid Monohydrate
- Aliquots of 3.02ml (= 3.7g) were sampled with a Gilson 5 ml pipet and transferred to a mould at a temperature of 130°C
- The formed hard candies were removed from the mould once they had cooled down.

The hard candies did not break easily.

The hardness of the hard candies prepared with recipe 2A and measured with the texture analyser was between 26.9 to 32.4 kg, with an average value of 28.9 kg and had a distance between 0.96 to 1.21 mm. with an average value of 1.09 mm.

### Comparative Examples - erythritol

### Recipe

Following recipe was tested:
- 100 w/w% erythritol (Cargill Eridex 16954)

### Cooking and shaping - Method

- 50g erythritol was weighed in 250ml Duran flasks with stopper. The Duran flask was put in an oil bath at 160°C for 15 minutes until the erythritol was melted, the flask was swirled regularly.
- Aliquots of 3.02ml (= 3.7g) were sampled with a Gilson 5 ml pipet and transferred to a mould
- The formed hard candies were removed from the mould once they had cooled down.

The hardness of the hard candies measured with the texture analyser was 11 kg and had a distance of 0.42 mm.

## Claims

1. A confectionery product containing maltodextrin and at least 93% w/w erythritol, preferably at least 95% w/w erythritol, more preferably at least 97% w/w erythritol, and said confectionery product is selected from the group consisting of hard candies, brittle, caramel, and toffee, preferably hard candies.

2. The confectionery product according to claim 1 wherein the product is further comprising crystallisation modifiers selected from a group consisting of microbial gums, agar agar, pectin, alginic acid, sodium alginate, beta-glucans, carrageenan, glucomannan, guar gum, gum ghatti, gum tragacanth, karaya gum, tara gum, fenugreek gum, locust bean gum, and mixtures of two or more thereof, preferably carrageenan.

3. The confectionery product according to claim 1 or 2 wherein the product is further comprising edible acids and/or salts.

4. The confectionery product according to anyone of claim 1 to 3 wherein the product is comprising at least 93% w/w erythritol, 2% w/w to 6% w/w maltodextrin, 0.1 % w/w to 2% carrageenan and 0.1 % w/w to 5% edible acids and/or salts.

5. A confectionery product according to claim 1 wherein the confectionery product is a hard candy and is comprising 93-97% w/w erythritol, maltodextrin, and a crystallisation modifier and optionally, edible acid, flavours and/or colouring agents.

6. A confectionery product according to claim 5 wherein the crystallisation modifier selected from a group consisting of microbial gums, agar agar, pectin, alginic acid, sodium alginate, beta-glucans, carrageenan, glucomannan, guar gum, gum ghatti, gum tragacanth, karaya gum, tara gum, fenugreek gum, locust bean gum, preferably carrageenan.

7. A process for preparing a confectionery product according to anyone of claims 1 to 5 by heating at a temperature from 120°C to 160°C an erythritol-containing mixture wherein the dry matter is containing maltodextrin and at least 93% w/w erythritol.

## Patentansprüche

1. Süßwarenprodukt, enthaltend Maltodextrin und mindestens 93 % Gew./Gew. Erythrit, vorzugsweise mindestens 95 % Gew./Gew. Erythrit, bevorzugter mindestens 97 % Gew./Gew. Erythrit, und wobei das Süßwarenprodukt ausgewählt ist aus der Gruppe, bestehend aus Bonbons, Krokant, Karamellbonbons und Sahnebonbons, vorzugsweise Bonbons.

2. Süßwarenprodukt nach Anspruch 1, wobei das Produkt weiterhin Kristallisationsmodifizierungsmittel umfasst, ausgewählt aus einer Gruppe, bestehend aus mikrobiellen Gummis, Agar-Agar, Pektin, Alginsäure, Natriumalginat, beta-Glukanen, Carrageenan, Glucomannan, Guargummi, Ghatti-Gummi, Tragacanthgummi, Karayagummi, Taragummi, Bockshornkleegummi, Johannisbrotbaumgummi und Gemischen von zwei oder mehreren davon, vorzugsweise Carrageenan.

3. Süßwarenprodukt nach Anspruch 1 oder 2, wobei das Produkt weiterhin genießbare Säuren und/oder Salze umfasst.

4. Süßwarenprodukt nach einem von Anspruch 1 bis 3, wobei das Produkt mindestens 93 % Gew./Gew. Erythrit, 2 % Gew./Gew. bis 6 % Gew./Gew. Maltodextrin, 0,1 % Gew./Gew. bis 2 % Carrageenan und 0,1 % Gew./Gew. bis 5 % essbare Säuren und/oder Salze umfasst.

5. Süßwarenprodukt nach Anspruch 1, wobei das Süßwarenprodukt ein Bonbon ist und 93-97 % Gew./Gew. Erythrit, Maltodextrin und ein Kristallisationsmodifizierungsmittel und gegebenenfalls genießbare Säure, Aromen und/oder färbende Mittel umfasst.

6. Süßwarenprodukt nach Anspruch 5, wobei das Kristallisationsmodifizierungsmittel, ausgewählt aus einer Gruppe, bestehend aus mikrobiellen Gummis, Agar-Agar, Pektin, Alginsäure, Natriumalginat, beta-Glukanen, Carrageenan, Glucomannan, Guargummi, Ghatti-Gummi, Tragacanthgummi, Karayagummi, Taragummi, Bockshornkleegummi, Johannisbrotbaumgummi, vorzugsweise Carrageenan.

7. Verfahren zur Herstellung eines Süßwarenprodukts nach einem von Ansprüchen 1 bis 5 durch Erhitzen eines Erythrit-enthaltenden Gemisches auf eine Temperatur von 120°C bis 160°C, wobei die Trockenmasse Maltodextrin und mindestens 93 % Gew./Gew. Erythrit enthält.

## Revendications

1. Produit de confiserie contenant de la maltodextrine et au moins 93 % en poids/poids d'érythritol, de préférence au moins 95 % en poids/poids d'érythritol, de manière plus préférée au moins 97 % en poids/poids d'érythritol, et ledit produit de confiserie est choisi parmi le groupe constitué par des bonbons durs, de la nougatine, du caramel, et du caramel au beurre, de préférence des bonbons durs.

2. Produit de confiserie selon la revendication 1, dans lequel le produit comprend en outre des modificateurs de la cristallisation choisis parmi le groupe constitué par des gommes microbiennes, l'agar-agar, la pectine, l'acide alginique, l'alginate de sodium, des bêta-glucanes, le carraghénane, le glucomannane, la gomme de guar, la gomme ghatti, la gomme adragante, la gomme karaya, la gomme tara, la gomme de fenugrec, la gomme de caroube, et des mélanges de deux d'entre eux ou plus, de préférence le carraghénane.

3. Produit de confiserie selon la revendication 1 ou 2, dans lequel le produit comprend en outre des acides et/ou des sels alimentaires.

4. Produit de confiserie selon l'une quelconque des revendications 1 à 3, dans lequel le produit comprend au moins 93 % en poids/poids d'érythritol, de 2 % en poids/poids à 6 % en poids/poids de maltodextrine, de 0,1 % en poids/poids à 2 % de carraghénane et de 0,1 % en poids/poids à 5 % d'acides et/ou de sels alimentaires.

5. Produit de confiserie selon la revendication 1, dans lequel le produit est un bonbon dur et comprend de 93 à 97 % en poids/poids d'érythritol, de la maltodextrine et un modificateur de la cristallisation, et de manière facultative de l'acide alimentaire, des arômes et/ou des agents colorants.

6. Produit de confiserie selon la revendication 5, dans lequel le modificateur de la cristallisation est choisi parmi un groupe constitué par des gommes microbiennes, l'agar-agar, la pectine, l'acide alginique, l'alginate de sodium, des bêta-glucanes, le carraghénane, le glucomannane, la gomme de guar, la gomme ghatti, la gomme adragante, la gomme karaya, la gomme tara, la gomme de fenugrec, la gomme de caroube, de préférence le carraghénane.

7. Procédé pour la préparation d'un produit de confiserie selon l'une quelconque des revendications 1 à 5, par chauffage à une température de 120 °C à 160 °C d'un mélange contenant de l'érythritol, dans lequel la matière sèche contient de la maltodextrine et au moins 93 % en poids/poids d'érythritol.
